# EUROPEAN PATENT APPLICATION

(11) **EP 4 154 705 A1**
(43) Date of publication of application: **29.03.2023**
(21) Application number: 22197033.8
(22) Date of filing: 22.09.2022
(51) Int. Cl.: A01J 27/00, A01J 27/04

(54) **METHOD AND APPARATUS FOR THE REMOVAL OF THE RIND OF CHEESES**

(30) Priority: 24.09.2021 NL 2029237
(71) Applicant: Dero Beheer BV, 2153 GM Nieuw-Vennep (NL)
(72) Inventor: TREUR, Adriaan, 2162 VB Lisse (NL)
(74) Representative: Koomen, M.J.I.

(57) **Abstract**

Method for the removal of the rind of cheeses (1), whereby use is made of an apparatus (13) with at least one robot arm (14) and with at least one mechanical planer (15), characterized in that the planer is arranged in the apparatus in a fixed position and is provided with means by which this can recede or compress when a force is exerted thereupon, whereby the robot arm picks up the cheese from a supply, holds this and moves this along the planer, and apparatus suitable for the application of the method.

## Description

The present invention relates to a method for the removal of the rind of cheeses, whereby use is made of an apparatus with at least one robot arm and with at least one mechanical planer, such as for instance a broach.

Such a method is known.

In the cheese processing industry it is a standard to remove the rind from cheeses. This is required when producing grated cheese or cheese cubes and also in the production of slices of cheese, because in for instance eateries or supermarkets one does not wish slices with the rind anymore in the product range.

With one of the known methods for removing the rind of rectangular cheese this is done by hand with an electrical manual planer. The rectangular cheese is placed on a table or turntable and a co-worker removes the rind from the cheese with an electrical cutter or tool, whereby meanwhile the cheese is turned and put upside down.

This method has the drawback that this is a toil and taxing for the co-worker, also because of the loud noise.

With another known method for removing the rind from rectangular cheese use is made of an arrangement with a linear guide with above that a series of cutters or planers arranged adjacent and behind each other. On the guide and underneath the cutters a carriage is movable. A cheese is placed on the carriage and is fixed thereon by means of vacuum or suction cups. The carriage is moved over the guide and underneath the series of cutters. The cutters remove the rind from the top. At the end of the route the guide is turned around. The wagon then finds itself underneath and the upside down cheese is released on a discharge belt present there, after which the other side of the cheese passes through a same route.

This known method has the drawback that an apparatus is required therefor with a rather complicated construction. Further this takes in relatively much space. The chips that arise end up on the guide and the surfaces and devices present in the space concerned. From the point of view of food hygiene these have to be cleaned thoroughly each time anew.

A further known method involves an arrangement whereby a robot arm picks up the cheese by means of suction cups and puts this down on a table or such like. With this arrangement the cheese lies on the table and another robot arm moves a cutter or broach along the top and the sides of the cheese and removes the rind. After this the cheese is turned around and the process repeats itself.

Also this known method has the drawback that the apparatus that is to be used therefore takes in relatively much space, so that the chips also end up on relatively many surfaces and devices that are present in the space concerned, with the need for thorough cleaning thereof.

Further, the known methods require the application of a vision system for inspecting the top and sides of the cheese and in dependence whereon the robot arm with the cutter is operated in such a way that the contours of the cheese rind, that is to say the unevennesses in the rind, are followed. With this it is aimed for not to remove more from the cheese than is strictly necessary.

It is an object of the present invention to provide a method that obviates the drawbacks of the known methods.

The method according to the invention to that end is characterized, in that the planer is arranged in the apparatus in a fixed position and is provided with means by which this can recede or compress when a force is exerted thereupon, and whereby the robot arm picks up the cheese from a supply, holds this and moves this along the planer.

According to a characteristic of the method according to the invention the cheese from which the rind is to be removed is formed by a cheese with a top and a bottom that each connect to two side edges, a top edge and a bottom edge, and with four sides that each connect to each other in angles, whereby the robot arm runs one or more sides in between the two angles connecting to the side concerned along a planer in one or more to and fro movements, and whereby the robot arm, according to another characteristic of the method according to the invention, runs the top or bottom in between the two side edges, or the top edge and the bottom edge, along at least two planers arranged parallel to each other in a series of to and fro movements.

The invention further relates to an apparatus for the removal of the rind of cheeses, comprising at least one robot arm and at least one mechanical planer, characterized in that the planer is arranged in the apparatus in a fixed position and is provided with means by which this an recede or compress when a force is exerted thereon, and whereby the robot arm is adapted to pick up the cheese, hold this and move this along the planer.

According to a characteristic of the apparatus according to the invention the planer is formed by a broach.

According to another characteristic of the apparatus according to the invention two, three, four, five, six or more planers or broaches are provided therein that are arranged parallel to each other.

According to a further characteristic of the apparatus according to the invention six planers or broaches are provided therein.

According to a further characteristic of the apparatus according to the invention the planers or broaches are arranged in the apparatus at a distance from each other, such, that on running the cheese along the planers the rind is removed in parallel extending strips.

According to a yet another characteristic of the apparatus according to the invention the distance between the planers or broaches has a dimension that is substantially equal to the dimension of the width of a strip removed by a planer or broach.

According to a further characteristic of the apparatus according to the invention the planers or broaches are arranged in the apparatus in such a way that together they take in substantially a V-shape.

Further characteristics and features will be described with reference to the drawings of an example of an embodiment of the apparatus according to the invention.
Figure 1 shows a perspective view of a rectangular cheese, such as an euroblock.
Figure 2a shows a view of a side, figure 2b a view of the front of the cheese.
Figure 3 shows a perspective view of an apparatus according to the invention.
Figure 4 shows a perspective view of a detail of figure 3.

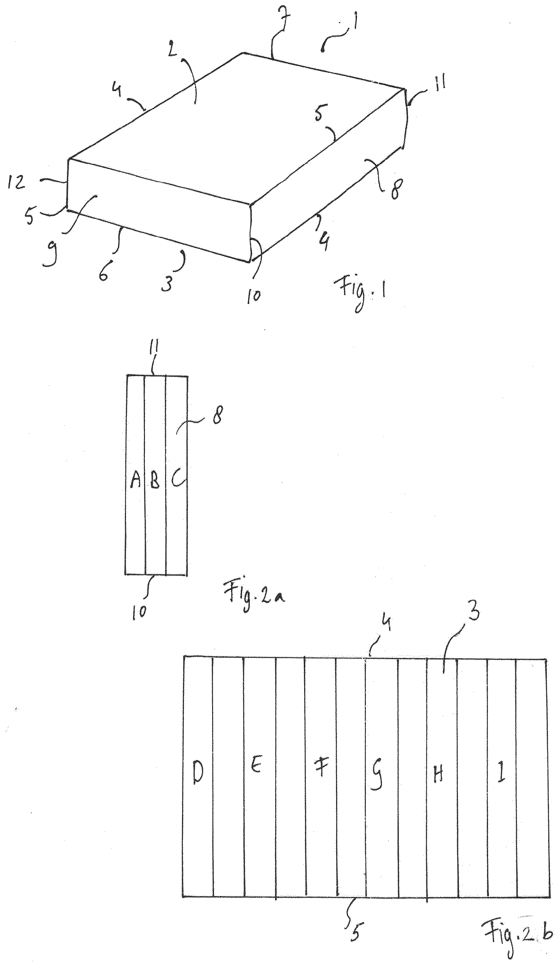

In figure 1 shown a rectangular cheese 1, such as an euroblock, with indicated thereon the top 2 and the bottom 3 that each connect to two side edges 4 and 5, a bottom edge 6 and a top edge 7, with the four sides, of which only the sides 8 and 9 can be seen in the perspective view of figure 1. The sides each connect to each other in the four angles, whereby in figure 1 only the connection of the side 8 to the angles 10 and 11 and the connection of the side 9 to the angles 12 and 10 is indicated.

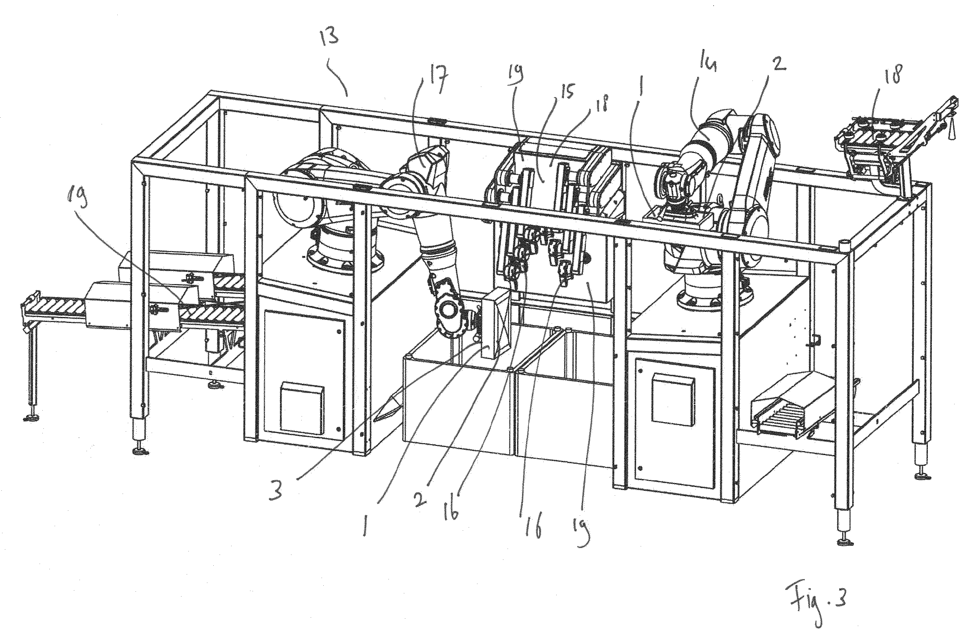

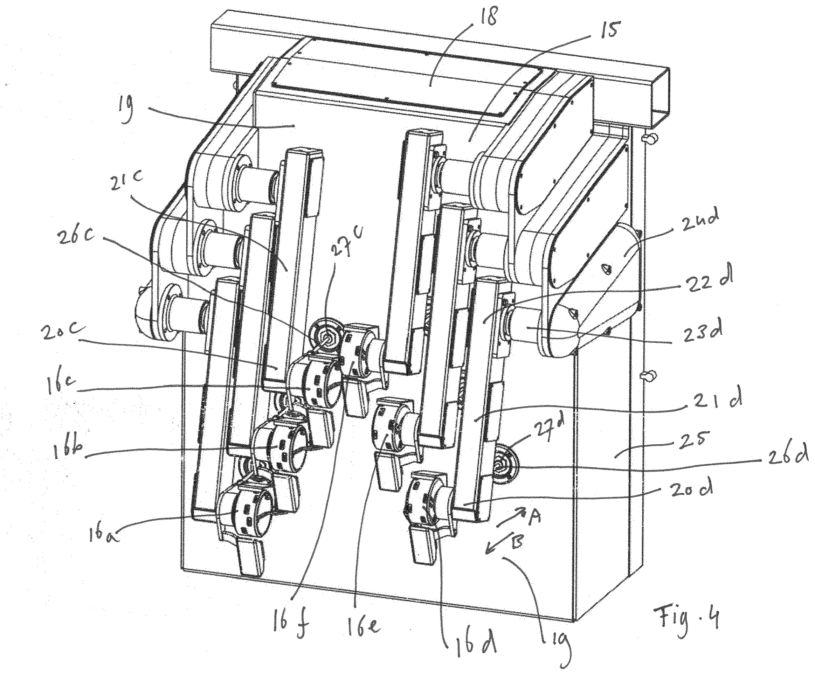

In the example of an embodiment shown in figure 3, with the method use is made of an apparatus 13 with a robot arm 14 and with a planer station 15, which planer station in the example of an embodiment shown is provided with a number of broaches 16 (figure 3), in this example of an embodiment six parallel arranged broaches 16a, 16b, 16c, 16d, 16e, 16 f (figure 4).

The broaches 16 are arranged in the planer station 15 at a distance from each other, which distance has a dimension that is substantially equal to the dimension of the width of a strip removed by a broach.

In the example of an embodiment shown the planer station 15 comprises a case 18. At the front 19 of the case 18 the broaches 16 are provided. The broaches 16 are mounted such that together these take in, in this example of an embodiment, substantially an upside down V-shape. With this arrangement the space that is to be taken up by the broaches 16a, 16b, 16c, 16d, 16e, 16f is kept relatively small.

The planer station 15 is provided with means by which the broaches 16a, 16b, 16c, 16d, 16e, 16f can recede or compress independently from each other when the robot 14 presses the cheese 1 with a given force against these broaches 16a-16f. By this it is attained that the force with which one of the broaches 16a-16f touches against the cheese rind does not exceed a given magnitude. More in particular by this ability to recede or compress of the separate broaches, it is achieved that the broaches can optimally follow the contours in the rind, that is to say the various unevennesses in the rind, such as holes and bumps.

By this it is made sure, that when running the cheese along the broach or broaches 16a-16f, no more of the cheese is taken off than is necessary for the removal of the rind.

The construction and operation of the means by which the broaches 16a-16f can recede is explained in this description with reference to figure 4 with regard to one of the broaches, the broach 16d. The construction and operation of the other broaches 16a-16c and 16e-16f corresponds with this.

In the example of an embodiment shown the broach 16d is mounted onto an outer end 20d of a rod 21d.

The other outer end 22d of the rod 21d is contained in a tube part 23d, which by means of an arm 24d is provided on to one of the sides of the case 18, in the example of an embodiment, the side 25. The outer end 22d can turn in the tube part 23d, such that the outer end 20d of the rod 21d can make a movement towards the front 19 of the case 18 and a movement away therefrom.

In the case 18 with regard to each broach 16a-16(f) a pneumatic cylinder is provided (the cylinder bodies of which are not shown in figure 4). In figure 4 is shown that the cylinder rod 26d of the cylinder protrudes through an opening 27d in the front side 19 of the case 18. The cylinder rod 26d is connected to the outer end 20d of the rod 21d, to which rod 21(d) the broach 16d is connected. When the force with which the robot arm 14 pushes the cheese 1 against the broach 16d is larger than the counter force exerted onto the cylinder piston rod 26d by the compressed air the piston rod 26d will retract, according to the arrow A in figure 4. The other way round, when the force with which the robot arm 14 pushes the cheese 1 against the broach 16d is smaller than the counter force exerted onto the cylinder piston rod by the compressed air the piston rod 26d will slide out, according to the arrow B in figure 4.

The construction and working of the other broaches 16a-16c and 16e-16f corresponds with this, as shown in figure 4 with regard to one of the other broaches, broach 16c, that is provided onto rod 21c, which with the outer end 20c is connected to the piston rod 26c.

Instead of compressed air use can also be made of other means by which a counter force can be generated. In this way one can think of providing the tube part 23d with a spring means, for instance a torsion spring or compression spring or such like, whereby the outer end 22d of the rod in the tube part 23d can turn against the pressure of the spring means.

However, with the use of a pneumatic cylinder there is the possibility of simply adjusting the quantity of bar, and by this the pressure that is thereby exerted onto the cylinder piston and the broach 16d connected thereto via the piston rod 26d, this in dependence of the sort of cheese (old/young) from which the rind is to be removed. In this way, the pressure will be chosen higher when it concerns an older (harder) cheese, so that the counter force generated by the broach 16d is sufficient to remove the rind.

With the method according to the invention the rind can be removed from all shapes of cheese, such as round cheeses, rectangular cheeses, square cheeses and such like, and cheeses of all ages.

Below the method according to the invention is explained with reference to a rectangular cheese, such as an euroblock.

In the example of an embodiment shown in figure 3 next to a robot 14 a further robot 17 is arranged. This however is not necessary. With the method use can also be made of just one robot.

The cheese 1 arrives on a conveyor belt and ends up on a roller belt. As can be seen in figure 3 a centring unit 18 is provided. This sees to it that the cheese 1 is neatly in the middle and the length and width thereof are measured. By means of this measuring the robot 14 and the robot 17 can be operated such that these pick up the cheese at the top 2 or bottom 3 in the middle of the plane and move the cheese according to a given route to and fro along the planer station 15 with the broaches 16a-16f.

In the example of an embodiment shown in figure 3 the robot 14 picks up the cheese at the top 2 by means of a suction cup and transports the cheese in the direction of the planer station 15. With one of the broaches 16a, 16b, 16c, 16d, 16e, 16f two sides 8, 9 or all sides of the cheese are planed by the robot 14. The robot 14 thereby moves the sides 8, 9 along one of the broaches, for instance in three to and fro movements. A forward movement, a backward movement and again a forward movement, so that the rind on the side 8 is removed in three strips A, B and C, as can be seen in figure 2a. Depending on the thickness of the cheese the robot can run this fewer or more times along the broach, or run this along more than one broach.

After that the robot 14 turns the cheese 1 and places this with the bottom 3 against the six broaches 16a-16f and the robot 14 lets the bottom 3 of the cheese make a movement along the broaches 16a-16f from the side edge 4 to the side edge 5.

In the example of an embodiment shown the broaches 16a-16f are arranged in the apparatus 13 at a distance from each other, whereby the distance between the broaches has a dimension that is substantially equal to the dimension of the width of a strip that is removed by a single broach. As can be seen in the detail of figure 4 the broaches 16 are arranged in the apparatus such that together they take in substantially a V-shape. By this it is achieved that when the robot 14 holds the cheese 1 at the top 2 or the bottom 3 along the broaches 16a-16f the cheese 1 is supported equable by the broaches 16. Further with this arrangement it is achieved that the space that is to be taken in by the broaches 16a, 16b, 16c, 16d, 16e, 16f can be kept relatively small.

During the running of the cheese along all six broaches 16a-16f the rind is removed in parallel extending strips D, E, F, G, H and I from the bottom 3, as can be seen in figure 2b.

In between the scraped-off strips D-I there are strips where the rind is still remaining. The robot 14 moves the cheese a length aside with respect to the broaches 16a-16f, and now the robot 14 anew lets the cheese make a movement along the broaches 16a-e (16a-16f), now from the side edge 5 to the side edge 4, and with which second movements the remaining strips are removed from the front of the cheese. With a total of two movements with, in this example of an embodiment, a total of twelve strips , the rind is removed from the bottom 3.

The number of broaches to be used and the number of strips to be removed are naturally dependant on the size of the cheese from which the rind is to be removed.

Also is possible that the strips from the bottom 3 respectively the top 2 of the cheese shown in the figures 1, 2a and 2b are removed in a movement that runs from the bottom edge 6 to the top edge 7. In that case the bottom 3 respectively the top 2 is moved by the robot 14 along only a part of the broaches 16a-16f, for instance only along the broaches 16a-16d, and whereby in a total of two movements of in a total of eight strips the rind is removed from the bottom 8(3) or top 2.

In the example of an embodiment shown the apparatus is provided with a further robot 17. After the removal of the rind from the bottom 3 of the cheese the robot 14 moves the cheese to the further robot 17, which takes hold of the cheese at the bottom 3. Next the further robot 17 places the cheese with the top 2 against the six broaches 16a-16f and repeats the two movements upwards and downwards along the broaches 16a-16f. After the planing the cheese is put down by the further robot 17 on one of the two discharge positions 19.

In the example of an embodiment shown use is made of an apparatus with two robots 14, 17, whereby the robot 14 hands over the cheese to the further robot 17. Also is possible an embodiment whereby the robot 14 places the cheese onto a conveyor belt and the further robot 17 picks up the cheese again. Also is possible an embodiment whereby use is made of more than two robots, or an embodiment wherein only one robot is used. In that case the single robot, after the removal of the rind from the bottom of the cheese, puts the cheese down on a holder with means for holding the cheese, for instance with clamping arms, and whereby the holder turns the cheese around, and places this on a surface, and from which the single robot picks up the cheese again and runs the top along the six broaches for the removal of the rind.

The method and apparatus according to the invention require relatively little space/room and devices, while the chips that come about with the method spread themselves in a space that is but small.

More in particular in figure 3 is to be seen, that the removal of the rind takes place at only one location 27, at the planer station 15, whereby the cheese chips spread themselves only minimally, and can be caught in a container 28 present therefor, and with that a far-reaching reduction is attained of the number of surfaces and devices that are exposed to the developing rind chips.

## Claims

1. Method for the removal of the rind of cheeses, whereby use is made of an apparatus with at least one robot arm and with at least one mechanical planer, **characterized in that** the planer is arranged in the apparatus in a fixed position and is provided with means by which this can recede or compress when a force is exerted thereupon, whereby the robot arm picks up the cheese from a supply, holds this and moves this along the planer.

2. Method according to claim 1, **characterized in that** the cheese from which the rind is to be removed is formed by a cheese with a top and a bottom that each connect to two side edges, a top edge and a bottom edge, and with four sides that each connect to each other in angles, whereby the robot arm runs one or more sides in between the two angles connecting to the side concerned along at least one planer in one or more to and fro movements.

3. Method according to claim 1 or 2, **characterized in that** the cheese from which the rind is to be removed is formed by a cheese with a top and a bottom that each connect to two side edges, a top edge and a bottom edge, and with four sides that each connect to each other in angles, whereby the robot arm runs the top or bottom in between the two side edges, or the top edge and the bottom edge, along at least two planers arranged parallel to each other in a series of to and fro movements.

4. Method according to claim 3, **characterized in that** the robot arm runs the top or bottom along two, three, four, five, six or more planers.

5. Method according to claim 3, **characterized in that** the robot arm runs the top or bottom along six planers.

6. Method according to one of the preceding claims, **characterized in that** the planer is formed by a broach.

7. Apparatus for the removal of the rind of cheeses, comprising at least one robot arm with means for picking up a cheese, such as by vacuum of suction cups, and with at least one mechanical planer, **characterized in that** the planer is arranged in the apparatus in a fixed position and is provided with means by which this can recede or compress when a force is exerted thereon, and whereby the robot arm is adapted to hold and move the cheese along the planer.

8. Apparatus according to claim 7, **characterized in that** the means, by which a planer can recede or compress when a force is exerted thereon, are formed by a planer station comprising a case on to which a tube part is provided, whereby in the tube part a one outer end of a rod rotatably is incorporated, while the other outer end of the before-mentioned rod is provided with the planer whereby, on a turning in the tube part of the one outer end, the other outer end with the planer can make a movement towards a front side of the case and can make a movement away therefrom, whereby spring means are provided, by means of which the movement of the planer towards the front side takes place against spring pressure, and the movement of the planer away from the front side takes place under spring pressure.

9. Apparatus according to claim 8, **characterized in that** the spring means are formed by a pneumatic cylinder the piston rod of which is connected to the other outer end of the rod, whereby, with a sliding in and sliding out of the cylinder rod the other outer end of the rod with the planer makes the movement towards the front of the case and away therefrom.

10. Apparatus according to claim 8, **characterized in that** the spring means are formed by a spring means provided in the tube part, such as a torsion spring or pressure spring or such like, such that the one outer end of the rod can turn in the tube part against the pressure of this spring means.

11. Apparatus according to claim 7, 8, 9 or 10, **characterized in that** two, three, four, five, six or more planers are provided that are arranged parallel to each other.

12. Apparatus according to claim 7, 8, 9, 10 or 11, **characterized in that** six planers are provided therein.

13. Apparatus according to claim 7, 8, 9, 10, 11 or 12, **characterized in that** a planer is formed by a broach.

14. Apparatus according to claim 7, 8, 9, 10, 11, 12 or 13, **characterized in that** the planers or broaches are arranged in the apparatus at a distance from each other, such, that on running of the cheese along the planers the rind is removed in parallel extending strips.

15. Apparatus according to claim 14, **characterized in that** the distance between the planers or broaches has a dimension that is substantially equal to the dimension of the width of a strip removed by a planer or broach.

16. Apparatus according to claim 11, 12, 13, 14 or 15, **characterized in that** the planers or broaches are arranged in the apparatus such that together they take in substantially a V-shape.
